# EUROPÄISCHE PATENTSCHRIFT

(11) **EP 2 467 293 B1**
(45) Veröffentlichungstag und Bekanntmachung des Hinweises auf die Patenterteilung: **09.11.2016**
(21) Anmeldenummer: 10745209.6
(22) Anmeldetag: 16.08.2010
(51) Int. Cl.: B62D 35/00, B62D 37/02

(54) **FAHRZEUG MIT EINEM DACH UND WENIGSTENS EINEM WIRBELGENERATOR**
VEHICLE HAVING A ROOF AND AT LEAST ONE VORTEX GENERATOR
VÉHICULE COMPORTANT UN TOIT ET AU MOINS UN GÉNÉRATEUR DE TURBULENCE

(30) Priorität: 17.08.2009 DE 102009037746
(43) Veröffentlichungstag der Anmeldung: 27.06.2012
(73) Patentinhaber: Bayerische Motoren Werke Aktiengesellschaft, 80809 München (DE)
(72) Erfinder: DIMITRIOU, Ioannis, 85417 Marzling (DE); NAEVE, Lars, 81829 München (DE); HOELL, Michael, 83727 Schliersee (DE)
(86) Internationale Anmeldenummer: PCT/EP2010/061910
(87) Internationale Veröffentlichungsnummer: WO 2011/020818

(56) Entgegenhaltungen:
- WO-A1-03/045768
- DE-A1- 19 755 593
- DE-A1-102004 026 764
- DE-A1-102006 043 449
- JP-U- 1 145 788
- US-A1- 2004 026 953
- US-A1- 2007 235 590

## Beschreibung

Die Erfindung betrifft ein Fahrzeug mit einem Dach und wenigstens einem Wirbelgenerator nach dem Oberbegriff des Anspruchs 1.

Derartige Fahrzeuge sind zum Beispiel aus der US 3,724,892, der FR 2 619 069 A1 und der DE 10 2004 026 764 A1 bekannt. Außerdem hat beispielsweise das Fahrzeug Mitsubishi Evo eine Mehrzahl von Wirbelgeneratoren im Bereich der Dachhinterkante. In Zusammenhang mit dem Mitsubishi Evo wird auf den Artikel "Research on Aerodynamic Drag Reduction by Vortex Generators" in der Mitsubishi Motors Technical Review 2004, Nr. 16, Seiten 11 bis 16, verwiesen.

Bei Fahrzeug mit Fließ-, Stufen- oder Steilheck entstehen grundsätzlich Strömungsablösungen der an der Fahrzeugoberseite entlang strömenden Luft im Bereich der Heckscheibe und der Heckklappe des Fahrzeugs. Dieses Ablösegebiet, auch Ablöseblase genannt, hat je nach Fahrzeugtyp eine unterschiedlich starke Ausprägung. Während bei Fließheckfahrzeugen die Ablöseneigung eher gering ausgeprägt ist, ist sie bei Fahrzeugen mit einer relativ steil stehenden Heckscheibe, insbesondere in Kombination mit einer kurzen Heckklappe, stärker ausgeprägt. Die Ablöseblase induziert ein Unterdruckgebiet, das zu einer Verringerung des Hinterachsauftriebes und zu einer Erhöhung des Luftwiderstandes führt.

Zur Verkleinerung der beschriebenen Ablöseblase werden beispielsweise am Dach von Personenkraftwagen die aus den oben genannten Druckschriften und dem genannten Fahrzeug bekannten Wirbelgeneratoren eingesetzt. Die Wirbelgeneratoren erzeugen energiereiche Luftwirbel. Durch diese zusätzliche Energie in der Luftströmung im Nachlauf der Wirbelgeneratoren wird erreicht, dass die Luftströmung länger am Dach und vor allem an der Heckscheibe und an der Heckklappe anliegt, was zu einer Verkleinerung der Ablöseblase führt. Zwar erhöhen die Wirbelgeneratoren zunächst den Luftwiderstand des Fahrzeugs. Diese Luftwiderstandserhöhung wird jedoch durch die verkleinerte Ablöseblase überkompensiert, so dass insgesamt eine Widerstandsreduzierung erreicht wird. Außerdem vermindern die Wirbelgeneratoren den Auftrieb an der Hinterachse.

Typischerweise werden mehrere Wirbelgeneratoren nebeneinander im Bereich der Dachhinterkante verbaut. Neben Wirbelgeneratoren mit einem im Wesentlichen plattenförmigen Luftleitkörper sind auch dreidimensionale Formen bekannt, wie beispielsweise in der DE 10 2004 026 764 A1 beschrieben.

Aus der WO 03/045768 A1 ist ein Fahrzeug mit wenigstens einem Wirbelgenerator im Bereich der Hinterkante des Fahrzeugdachs bekannt. Der Wirbelgenerator kann von einer Vertiefung oder einer Erhebung der Fahrzeugaußenhaut gebildet sein. Alternativ ist der Wirbelgenerator ein schräg stehender Zusatzkörper, der gerade oder gekrümmte Linien aufweist. Der bekannte Wirbelgenerator ist unter einem Winkel von ungefähr 0° bis 30° zur Strömungsrichtung angestellt.

Aufgabe der Erfindung ist es, ein Fahrzeug bereitzustellen, bei dem durch die Gestaltung und/oder die Anordnung von Wirbelgeneratoren das Ablösegebiet der Strömung im Bereich des Daches und/oder der Heckscheibe und/oder der Heckklappe verkleinert wird.

Diese Aufgabe wird durch ein Fahrzeug mit den Merkmalen des Anspruchs 1 gelöst.

Kerngedanke der Erfindung ist es dabei, Wirbelgeneratoren zu verwenden, bei denen der Luftleitkörper eine gekrümmte Längsachse aufweist. Durch die Krümmung des Wirbelgenerators wird eine verbesserte Initiierung des Wirbels und damit eine energiereichere Strömung erreicht. In Folge der stärker verwirbelten Luftströmung liegt diese länger an der Außenhaut des Fahrzeugs an. Durch die erfindungsgemäß erzeugte energiereichere Strömung ergibt sich eine kleinere Ablöseblase.

Im Unterschied zu den bekannten symmetrischen Wirbelgeneratoren mit einer geradlinig verlaufenden Längsachse werden bei den erfindungsgemäßen Wirbelgeneratoren unterschiedliche Anlaufwinkel und Auslaufwinkel erzeugt. Unter dem Anlaufwinkel versteht man den Winkel, den die Längsachse des Wirbelgenerators in dessen Anfangsbereich mit der Längsachse des Fahrzeugs einschließt. Entsprechend ist der Auslaufwinkel der Winkel, den die Längsachse des Wirbelgenerators in dessen Endbereich mit der Längsachse des Fahrzeugs einschließt. Durch die Erfindung können die beiden Winkel je nach Strömungstopologie des betreffenden Fahrzeugs optimal abgestimmt werden, im Unterschied zu den bekannten Wirbelgeneratoren, die identische Anlauf- und Auslaufwinkel aufweisen.

Die mittlere Längsachse des wenigstens einen Wirbelgenerators ist unter einem Winkel zwischen 0° und 45° zur Längsmittenebene des Fahrzeuges angeordnet.

Gemäß der Erfindung verläuft die Längsachse des Luftleitkörpers des Wirbelgenerators in seinem vorderen Bereich gegenüber dem hinteren Bereich unter einem größeren Winkel gegenüber der Fahrzeuglängsachse. Der Wirbelgenerator hat also einen vergleichsweise großen Anlaufwinkel gegenüber einem vergleichsweise kleinen Auslaufwinkel. Die Entstehung eines Wirbels an einem Wirbelgenerator wird grundsätzlich durch einen möglichst großen Anlaufwinkel gegenüber der Strömungsrichtung der Luft begünstigt. Zur Weiterführung der Strömung muss der entstandene Wirbel anschließend jedoch in der optimalen Strömungsrichtung geführt werden. Diese Funktion der Weiterführung der Strömung wird vom hinteren Bereich des Wirbelgenerators übernommen. Die Richtung der Strömung im Anschluss an den Bereich der Dachhinterkante wird durch Simulation oder durch Messungen ermittelt. Bei den meisten Fahrzeugen gilt, dass eine geringe Ablenkung des Wirbels gegenüber der Fahrzeuglängsachse von Vorteil ist, der Auslaufwinkel also möglichst klein zu wählen ist. Damit wird erreicht, dass die verwirbelte Luftströmung im hinteren Bereich des Wirbelgenerators nicht zu stark von der Fahrzeuglängsachse abgelenkt wird, was sich nachteilig auf die aerodynamischen Eigenschaften auswirken würde. Bei einer zu starken Reduzierung des Auslaufwinkels gegenüber dem Anlaufwinkel kommt es jedoch zu einer zu schwachen Ausbildung der Wirbel, da kleine Auslaufwinkel zwar die Weiterleitung der Strömung begünstigen, insgesamt jedoch die Wirbelbildung abschwächen.

Mit anderen Worten wird bei den erfindungsgemäßen gekrümmten Wirbelgeneratoren durch einen relativ großen Anlaufwinkel die Ausbildung von Wirbeln begünstigt, während im weiteren Verlauf des Wirbelgenerators durch einen vergleichsweise kleinen Auslaufwinkel eine Strömungsleitung möglichst parallel zur Fahrzeuglängsrichtung erreicht wird.

Wie bereits oben erwähnt, verläuft die mittlere Längsachse des Wirbelgenerators bevorzugt unter einem Winkel zwischen 0° und 45° zur Längsmittenebene des Fahrzeuges, wobei in einer vorteilhaften Ausgestaltung der Erfindung die vordere Kante des Wirbelgenerators näher an der Längsmittenebene liegt als die hintere Kante. Durch diese Art der Schrägstellung des Wirbelgenerators wird eine optimale Wirbelausbildung gefördert.

Selbstverständlich ist auch eine Anordnung der Wirbelgeneratoren möglich, bei der die hintere Kante des Wirbelgenerators näher an der Längsmittenebene liegt als die vordere Kante.

In vorteilhafter Ausgestaltung der Erfindung sind die Wirbelgeneratoren achsensymmetrisch zu beiden Seiten der Längsmittenebene des Kraftfahrzeugs angeordnet. Selbstverständlich ist auch eine asymmetrische Anordnung möglich, sowohl hinsichtlich der Abstände der Wirbelgeneratoren zueinander und/oder der Ausrichtung zur Längsmittenebene und/oder der Größe und/oder der Form der Wirbelgeneratoren.

Bevorzugt sind zu beiden Seiten der Längsmittenebene des Kraftfahrzeugs mehrere Wirbelgeneratoren vorgesehen. Die Anzahl, Anordnung und/oder geometrische Gestaltung der einzelnen Wirbelgeneratoren einschließlich deren Anlauf- und Auslaufwinkel ist an den entsprechenden Fahrzeugtyp individuell anzupassen. Als Folge eines aerodynamischen Optimierungsprozesses weichen die einzelnen Wirbelgeneratoren an einem Fahrzeug häufig hinsichtlich ihrer Geometrie voneinander ab. Es ist jedoch auch denkbar, dass alle oder zumindest ein Teil der Wirbelgeneratoren identisch ausgeführt sind. In der überwiegenden Anzahl praktischer Anwendungsfälle sind die Wirbelgeneratoren unter einem Winkel größer 0° zur Fahrzeuglängsachse angeordnet, wobei grundsätzlich jedoch eine Ausrichtung parallel zur Fahrzeuglängsachse ebenfalls möglich ist.

Die Wirbelgeneratoren können gleichsinnig angeordnet sein, also parallel oder annähernd parallel zueinander ausgerichtet sein. Mit anderen Worten sind bei dieser Ausführungsform beispielsweise alle vorderen Kanten der Wirbelgeneratoren näher an der Längsmittenebene des Fahrzeugs als die hinteren Kanten. Alternativ können die Wirbelgeneratoren paarweise gegensinnig angeordnet sein, so dass also jeweils zwei benachbarte Wirbelgeneratoren zusammen eine V-förmige Anordnung bilden. Wie bereits oben erwähnt, bezieht sich die gleichsinnige (parallele) Anordnung bzw. die gegensinnige (V-förmige) Anordnung bevorzugt auf eine Fahrzeugseitenhälfte und ist achsensymmetrisch zur Längsmittenebene des Fahrzeugs. Selbstverständlich können die Wirbelgeneratoren jedoch auch asymmetrisch angeordnet sein.

Der Winkel, den die Längsachse des Luftleitkörpers des Wirbelgenerators zur Fahrzeuglängsachse einschließt, kann sich kontinuierlich entlang des Längenverlaufs des Wirbelgenerators verändern. Alternativ kann die Krümmung durch eine oder mehrere Unstetigkeitsstellen ("Knicke") dargestellt werden.

Entsprechend einer vorteilhaften Ausgestaltung der Erfindung ist wenigstens eine Seitenfläche des Luftleitkörpers des erfindungsgemäßen Wirbelgenerators konkav ausgebildet. Durch diese gekrümmte Seitenwandgeometrie wird die Wirbelausbildung weiter unterstützt, wobei gleichzeitig das den Wirbelgenerator verursachte Strömungsrauschen reduziert wird.

Der wenigstens eine Wirbelgenerator kann als separates Bauteil ausgeführt und mit dem Dach und/oder der Heckscheibe und/oder einem Dachspoiler oder dergleichen beispielsweise durch Verklebung oder Verschweißung verbunden sein. Diese Ausführungsform bietet sich vor allem bei einer kompliziert geformten Geometrie des Wirbelgenerators und/oder bei unterschiedlichen Materialien von Wirbelgenerator und Fahrzeugdach und/oder der Heckscheibe und/oder einem Dachspoiler oder dergleichen an. Alternativ kann der wenigstens eine Wirbelgenerator auch als integraler Bestandteil des Fahrzeugdaches und/oder eines Dachspoilers oder dergleichen durch entsprechende Umformprozesse während der Herstellung des Daches und/oder des Dachspoilers, bevorzugt aus einem metallischen Werkstoff, hergestellt werden. Ebenso ist die Herstellung eines

Fahrzeugdaches und/oder eines Dachspoilers aus einem Kunststoffmaterial mit integrierten Wirbelgeneratoren denkbar. Bei Wirbelgeneratoren an einer Heckscheibe können diese bei der Herstellung der Heckscheibe unmittelbar mit der Heckscheibe einstückig gegossen werden; alternativ können die Wirbelgeneratoren jedoch auch als separate Bauteile, beispielsweise aus einem Kunststoffmaterial, auf die Heckscheibe aufgesetzt werden.

Die Anpassung der Wirbelgeneratoren an die Strömungstopologie des Fahrzeugs kann auf mehrere Arten erfolgen. Meist bedient man sich einer Visualisierung der Strömung im Heckbereich des Fahrzeuges und erhält hierbei die so genannten Wandstromlinien. Die Visualisierung erfolgt beispielsweise mittels einer numerischen Simulation durch ein Computerprogramm. Alternativ werden Methoden zur Sichtbarmachung der Strömung im Windkanal oder im praktischen Fahrversuch verwendet, beispielsweise durch Einsatz von Anstrichfarben, Rauch etc.

Die auf diese Weise entlang des Daches und/oder der Heckscheibe des Fahrzeugs ermittelten Wandstromlinien geben die lokal vorliegende Strömungsrichtung wieder und dienen als Anhaltspunkt für die optimale Ausrichtung der Wirbelgeneratoren. Je nach Verlauf der Wandstromlinien entlang der Breiten- und Längserstreckung des Daches und/oder der Heckscheibe kann für jeden einzelnen Wirbelgenerator eine Optimierung hinsichtlich seiner Geometrie und seiner Position erforderlich oder zumindest vorteilhaft sein.

Aus aeroakustischer Sicht besteht bei Wirbelgeneratoren an Personenkraftwagen die Problematik, dass diese ein so genanntes Strömungsrauschen erzeugen, welches für die Insassen, insbesondere für die Fondinsassen, als Störgeräusch durch die Heckscheibe wahrnehmbar ist. Dieses Strömungsrauschen entsteht direkt durch die energiereichen Luftwirbel im Nachlauf der Wirbelgeneratoren. Zusätzlich bewirkt die länger am Fahrzeug anliegende Strömung ebenfalls eine Erhöhung des Strömungsrauschens. Durch die erfindungsgemäße Krümmung der Wirbelgeneratoren wird das Strömungsrauschen signifikant reduziert, in einem Maß, dass es von den Insassen kaum mehr wahrgenommen werden kann.

Ebenso bewirkt eine entgegen der Fahrtrichtung ansteigende Höhe der Wirbelgeneratoren eine Reduzierung des Strömungsrauschens, indem der Wirbelgenerator im Bereich mit großem Anlaufwinkel weniger hoch und im Bereich mit kleinerem Auslaufwinkel deutlich höher aufbaut. Außerdem kann das Strömungsrauschen zusätzlich durch eine Verrundung der Kanten der Wirbelgeneratoren verringert werden.

Grundsätzlich ist der wenigstens eine Wirbelgenerator im Bereich der Hinterkante des Fahrzeugdachs angeordnet, also im hinteren Bereich des Dachs oder im vorderen Bereich der sich an das Dach anschließenden Heckscheibe. Der Wirbelgenerator kann hierzu gleichwirkend auch an einem Außenhautbauteil angeordnet sein, das den Bereich der Hinterkante des Fahrzeugdachs überdeckt, wie beispielsweise an einem Dachspoiler oder dergleichen. Selbstverständlich können Wirbelgeneratoren auch an mehreren Fahrzeugkomponenten im Bereich der Dachhinterkante vorgesehen sein.

Mögliche Ausführungsbeispiele der Erfindung sind in der Zeichnung dargestellt und werden nachfolgend näher beschrieben. Es zeigt:
- Fig. 1: ein erstes Ausführungsbeispiel der Erfindung, in der Draufsicht auf den hinteren Bereich eines Fahrzeuges,
- Fig. 2: einen vergrößerten Ausschnitt der Darstellung von Fig. 1,
- Fig. 3: ein weiter vergrößerter Ausschnitt von Fig. 1, mit Darstellung des Strömungsverlaufes,
- Fig. 4: ein Querschnitt entsprechend der Schnittverlaufslinie IV-IV in Fig. 3,
- Fig. 5: ein Längsschnitt entsprechend der Schnittverlaufslinie V-V in Fig. 3 und
- Fig. 6 bis 8: weitere Ausführungsbeispiele der Erfindung, jeweils in der Fig. 1 entsprechender Darstellung.

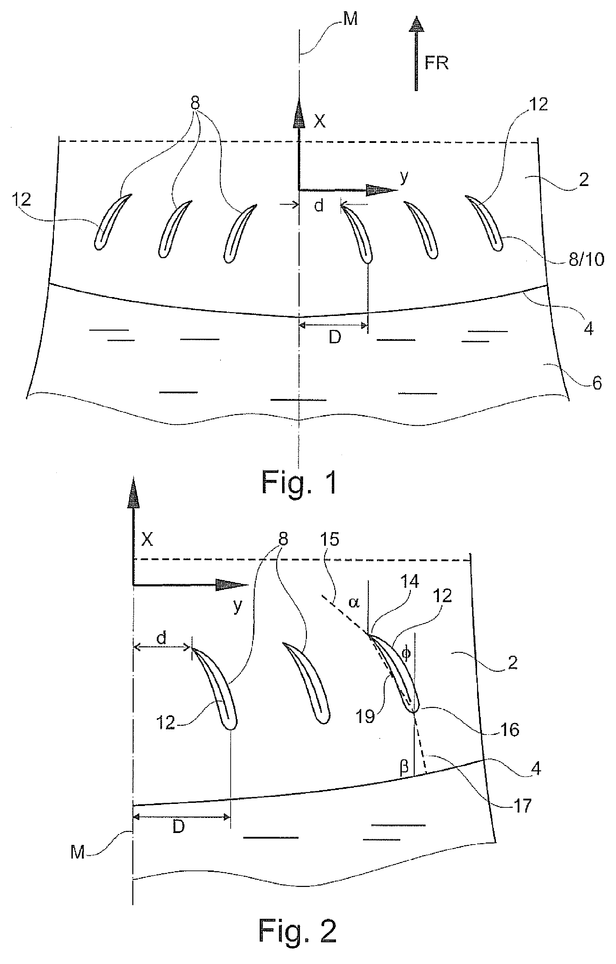

Fig. 1 zeigt einen Ausschnitt eines Fahrzeugdaches 2 eines Personenkraftwagens. Die Längsrichtung des Fahrzeugs ist mit x bezeichnet. Bei Geradeausfahrt ist die Längsrichtung x parallel zur Fahrtrichtung FR des Fahrzeugs. An die Hinterkante 4 des Fahrzeugdaches 2 schließt sich eine Heckscheibe 6 an. Erfindungsgemäß sind unmittelbar im Bereich vor der Hinterkante 4 des Fahrzeugdaches 2 sechs Wirbelgeneratoren 8 nebeneinander angeordnet, und zwar jeweils drei Wirbelgeneratoren 8 an der linken und an der rechten Dachhälfte, achsensymmetrisch zur Längsmittenebene M des Fahrzeugdaches 2, die vorliegend identisch ist mit der Längsmittenebene M des Fahrzeugs. Die Querrichtung des Fahrzeugs ist mit y bezeichnet. Die Wirbelgeneratoren 8 weisen einen Luftleitkörper 10 auf, dessen Längsachse 12 gekrümmt und gegenüber der Längsrichtung x des Fahrzeugs unter einem vergleichsweise kleinem spitzen Winkel ϕ (siehe Fig. 2) angestellt ist.

Die geometrischen Verhältnisse werden anhand der vergrößerten Darstellung von Fig. 2 näher erläutert. Die einzelnen Wirbelgeneratoren 8 mit ihren Luftleitkörpern 10 haben eine gekrümmte Längsachse 12. Durch die Krümmung der Längsachse 12 ergibt sich im Bereich der vorderen Kante 14 der Wirbelgeneratoren 8 ein vergleichsweise großer Anlaufwinkel α (Winkel zwischen der Tangente 15 an die Längsachse 12 und der Längsrichtung x). Demgegenüber ist der Auslaufwinkel β im hinteren Bereich 16 des Wirbelgenerators 8 (Winkel zwischen der Tangente 17 an die Längsachse 12 und der Längsrichtung x) relativ klein.

Der mittlere Winkel der Längsachse 12 des Wirbelgenerators 8 zur Längsrichtung x des Fahrzeugs (Winkel zwischen der Verbindungslinie 19 von vorderer und hinterer Kante 12 bzw. 16 des Wirbelgenerators 8 und der Längsrichtung x) ist mit ϕ bezeichnet.

Die Wirbelgeneratoren 8 haben in der Draufsicht etwa eine Tragflügelform, mit einer vergleichsweise spitzen vorderen Kante 14 und einem gerundeten Auslauf im Bereich der hinteren Kante 16.

Die vorderen Kanten 14 der Wirbelgeneratoren 8 sind mit einem Abstand d zur Längsmittenebene M angeordnet, der kleiner ist als der Abstand D der hinteren Kanten 16 der Wirbelgeneratoren 8 zur Längsmittenebene M. Die Abstände d und D sind in den Fig. 1 und 2 beispielhaft anhand der beiden inneren Wirbelgeneratoren 8 dargestellt, stellvertretend für eine entsprechende Schrägstellung auch der mittleren und der äußeren Wirbelgeneratoren 8.

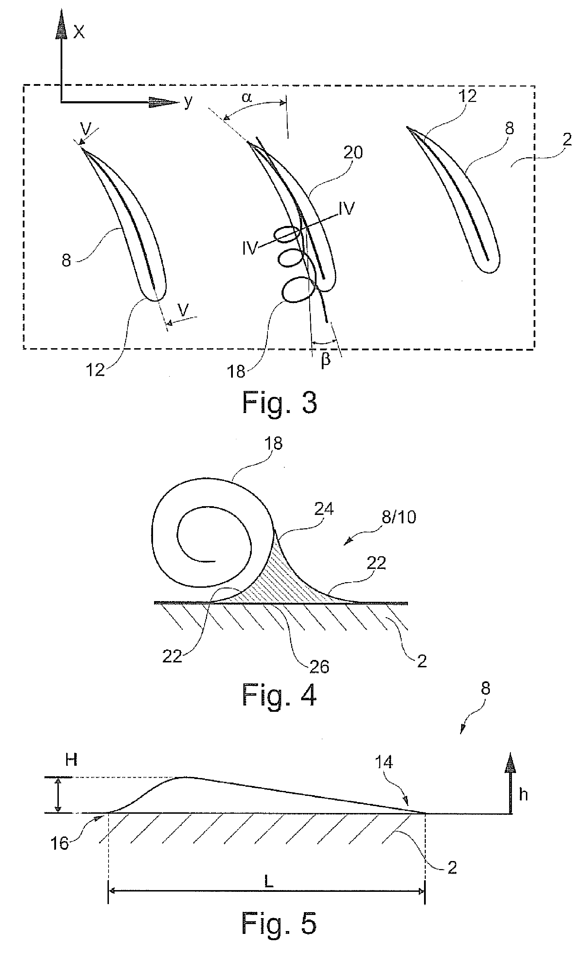

Fig. 3 verdeutlicht die Wirbelausbildung anhand einer symbolhaft dargestellten Strömungslinie 18. Etwa im Bereich des Übergangs vom ersten auf das zweite Drittel der Längserstreckung des Wirbelgenerators 8 beginnt an einem mit der Bezugszahl 20 bezeichneten Ablösepunkt die Wirbelausbildung. Diese Wirbelausbildung wird durch den vergleichsweise großen Anlaufwinkel α begünstigt. Der kleinere Auslaufwinkel β hingegen unterstützt die Strömungsweiterleitung und gibt dem Wirbel 18 eine Richtung möglichst parallel zur Längsachse x vor.

Fig. 4 zeigt einen Wirbelgenerator 8 im Querschnitt. Der Wirbelgenerator 8 weist einen für seine aerodynamische Funktion maßgeblichen Luftleitkörper 10 auf, mit konkav geformten Seitenflächen 22, die von der Oberkante 24 des Luftleitkörpers 10 ausgehen und an seiner Bodenfläche 26 enden. Die konkave Ausgestaltung der Seitenflächen 22 des Wirbelgenerators 8 unterstützt die Wirbelausbildung, dargestellt durch die Strömungslinie 18. Außerdem bewirkt die konkave Form der Seitenflächen eine signifikante Reduzierung des durch die Verwirbelungen generierten Strömungsrauschens. Im Ausführungsbeispiel der Fig. 4 ist der Wirbelgenerator 8 beispielsweise aus einem Kunststoffmaterial hergestellt und entlang seiner Bodenfläche 24 zum Beispiel über eine Klebeverbindung mit dem Dach 2 verbunden.

In Fig. 5 ist ein Wirbelgenerator 8 im Längsschnitt dargestellt. Die Höhe h des Wirbelgenerators 8 nimmt - ausgehend von seiner vorderen Kante 14 - gleichmäßig in Richtung seiner hinteren Kante 16 zu. Nach etwa 80 % der Länge L des Wirbelgenerators 8 hat dieser seine maximale Höhe H erreicht und fällt zur hinteren Kante 16 vergleichsweise steil ab. Die beschriebene, entgegen der Fahrtrichtung zunehmende Höhe h des Wirbelgenerators 8 vermindert das Strömungsrauschen, das bei Wirbelgeneratoren 8 generell als unerwünschter Nebeneffekt auftritt.

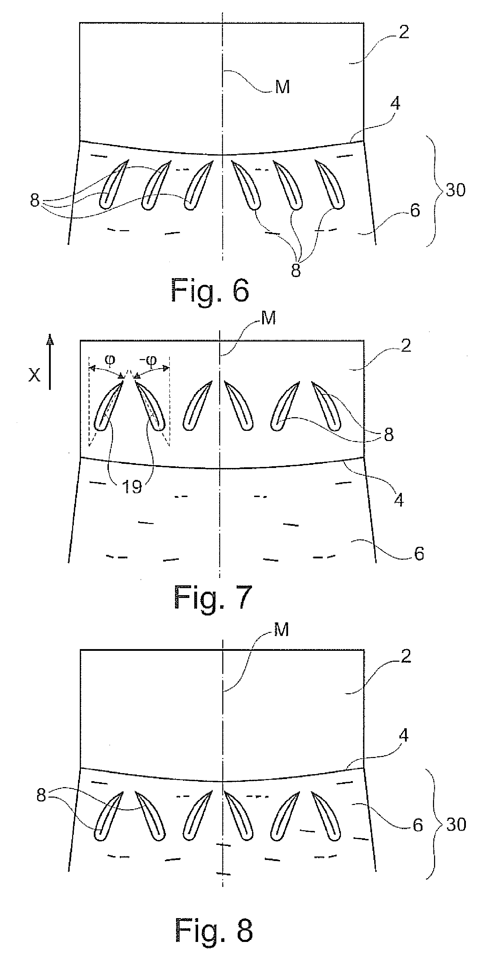

Während sich bei dem ersten Ausführungsbeispiel der Erfindung gemäß den Fig. 1 bis 5 die Wirbelgeneratoren 8 am Fahrzeugdach 2 des Personenkraftwagens befinden, sind bei einem zweiten Ausführungsbeispiel die Wirbelgeneratoren 8 an der Heckscheibe 6 angeordnet, in einem Bereich 30 benachbart zur Hinterkante 4 des Fahrzeugdaches 2. Die Befestigung erfolgt bevorzugt durch Verklebung. Im Übrigen entspricht die Anordnung und Ausrichtung der Wirbelgeneratoren 8 gemäß Fig. 6 dem ersten Ausführungsbeispiel. Entscheidend ist in beiden Fällen, dass sich die Wirbelgeneratoren 8 im Bereich 30 der Hinterkante 4 des Fahrzeugdachs 2 befinden, in dem sich bei Fahrt des Kraftfahrzeuges eine Ablöseblase bildet. Mit den Wirbelgeneratoren 8 an der Heckscheibe 6 wird die Strömung im weiteren Verlauf der Heckscheibe 6 und der Heckklappe in der oben beschriebenen Weise positiv beeinflusst.

Gemäß Fig. 6 sind die Wirbelgeneratoren 8 im dachnahen Bereich 30 der Heckscheibe 6 angeordnet. Alternativ hierzu können die Wirbelgeneratoren 8 auch an einem so genannten Dachspoiler (nicht dargestellt) vorgesehen sein, der sich in bekannter Weise an die Dachhinterkante 4 anschließt und die Heckscheibe 6 in ihrem vordersten Bereich überdeckt. Derartige Dachspoiler bestehen bevorzugt aus Kunststoff, können jedoch auch aus einem metallischen Werkstoff gefertigt sein. Die Wirbelgeneratoren 8 können durch Verklebung am Dachspoiler befestigt sein. Ebenso können die Wirbelgeneratoren 8 integral mit dem Dachspoiler ausgebildet sein.

Fig. 7 zeigt ein drittes Ausführungsbeispiel der Erfindung, bei dem die Wirbelgeneratoren 8 paarweise gegensinnig gegen die Luftströmung angestellt sind. Hiermit werden grundsätzlich die gleichen strömungstechnischen Effekte erzielt wie bei den beiden vorangegangenen Ausführungsbeispielen. Vorliegend sind die Winkel ϕ und -ϕ zwischen den Verbindungslinien 19 von vorderen und hinteren Kanten 12 bzw. 16 der Wirbelgeneratoren 8 und der Längsrichtung x des Fahrzeugs betragsmäßig gleich groß. Selbstverständlich können die Winkel ϕ und -ϕ auch unterschiedlich groß sein.

Die in Fig. 7 dargestellte V-förmige Anordnung der Wirbelgeneratoren 8 kann grundsätzlich je Dachseitenhälfte ein oder mehrere Paare einander zugewandter Wirbelgeneratoren 8 aufweisen. Im Ausführungsbeispiel der Fig. 7 wird das mittlere Paar von Wirbelgeneratoren 8 von jeweils einem Wirbelgenerator 8 beider Dachseitenhälften gebildet.

In Fig. 8 ist ein viertes Ausführungsbeispiel der Erfindung dargestellt, bei dem die Wirbelgeneratoren 8 an der Heckscheibe 6 in deren dachnahem Bereich 30 in paarweise gegensinniger Ausrichtung angeordnet sind. Auch hier können die Wirbelgeneratoren 8 alternativ an einem Dachspoiler angeordnet sein, wie oben zu Fig. 6 ausgeführt.

Zusammenfassend lässt sich die Erfindung wie folgt beschreiben: Bei einem erfindungsgemäßen Fahrzeug sind im Bereich der Hinterkante 4 des Fahrzeugdaches 2 mehrere Wirbelgeneratoren 8 angeordnet. Die Luftleitkörper 10 der Wirbelgeneratoren 8 weisen eine gekrümmte Längsachse 12 auf, wodurch eine verbesserte Wirbelentstehung im Anfangsbereich der Wirbelgeneratoren 8 erreicht wird. Durch die energiereichen Wirbel 18 liegt die Strömung im Anschluss an die Dachhinterkante 4 stärker an, so dass das Strömungsablösegebiet im Bereich der Heckscheibe 6 und der sich daran anschließenden Heckklappe reduziert wird. Hierdurch wird der Luftwiderstandsbeiwert reduziert und eine Verringerung des Auftriebes an der Hinterachse des Fahrzeugs erreicht.

## Patentansprüche

1. Fahrzeug mit einem Dach (2) und wenigstens einem Wirbelgenerator (8) im Bereich der Hinterkante des Daches (2), wobei der Wirbelgenerator (8) einen Luftleitkörper (10) hat, dessen Längsachse (12) unter einem Winkel zwischen 0°und 45° zur Fahrzeuglängsrichtung (x) verläuft, wobei der Wirbelgenerator (8) eine gekrümmte Längsachse (12) aufweist und die Verbindungslinie (19) von vorderer und hinterer Kante (12 bzw. 16) des Wirbelgenerators (8) mit der Fahrzeuglängsrichtung (x) einen Winkel (ϕ) zwischen 0°und 45° einschließt,
**dadurch gekennzeichnet, dass** der Winkel (α), den die Tangente (15) an die Längsachse (12) des Wirbelgenerators (8) in dessen vorderem Bereich mit der Fahrzeuglängsrichtung (x) einschließt, größer ist als der Winkel (β), den die Tangente (17) an die Längsachse (12) des Wirbelgenerators (8) in dessen hinterem Bereich mit der Fahrzeuglängsrichtung (x) einschließt.

2. Fahrzeug nach Anspruch 1,
**dadurch gekennzeichnet, dass** die vordere Kante (14) des wenigstens einen Wirbelgenerators (8) mit einem geringeren Abstand (d) zur Längsmittenebene (M) des Fahrzeugs angeordnet ist als die hintere Kante (16).

3. Fahrzeug nach Anspruch 1 oder 2,
**dadurch gekennzeichnet, dass** die Wirbelgeneratoren (8) in Bezug auf die Längsmittenebene (M) des Fahrzeugdaches (2) achsensymmetrisch auf den beiden Seitenhälften des Daches (2) und/oder einer Heckscheibe (6) und/oder eines Dachspoilers des Fahrzeugs angeordnet sind.

4. Fahrzeug nach einem der vorangegangenen Ansprüche,
**dadurch gekennzeichnet, dass** beidseits der Längsmittenebene (M) eine Mehrzahl von Wirbelgeneratoren (8) vorgesehen ist.

5. Fahrzeug nach einem der vorangegangenen Ansprüche,
**dadurch gekennzeichnet, dass** wenigstens zwei benachbarte Wirbelgeneratoren (8) gleichsinnig ausgerichtet sind.

6. Fahrzeug nach einem der vorangegangenen Ansprüche,
**dadurch gekennzeichnet, dass** wenigstens zwei benachbarte Wirbelgeneratoren (8) gegensinnig ausgerichtet sind.

7. Fahrzeug nach einem der vorangegangenen Ansprüche,
**dadurch gekennzeichnet, dass** die Form und/oder die Größe der Wirbelgeneratoren (8) und/oder die Krümmung und/oder der Winkel (ϕ), unter dem die Wirbelgeneratoren (8) zur Fahrzeuglängsachse (x) angeordnet sind, bei den einzelnen Wirbelgeneratoren (8) unterschiedlich ist.

8. Fahrzeug nach einem der vorangegangenen Ansprüche,
**dadurch gekennzeichnet, dass** wenigstens eine Seitenfläche (22) des Wirbelgenerators (8) konkav gewölbt ist.

9. Fahrzeug nach einem der vorangegangenen Ansprüche,
**dadurch gekennzeichnet, dass** der wenigstens eine Wirbelgenerator (8) als zum Dach (2) und/oder zu einer Heckscheibe (6) und/oder zu einem Dachspoiler des Fahrzeugs separates Bauteil ausgeführt ist und mit dem Dach (2) bzw. der Heckscheibe (6) bzw. dem Dachspoiler form- und/oder stoffschlüssig verbunden ist.

10. Fahrzeug nach einem der Ansprüche 1 bis 8,
**dadurch gekennzeichnet, dass** der wenigstens eine Wirbelgenerator (8) als integraler Bestandteil des Dachs (2) und/oder einer Heckscheibe (6) und/oder eines Dachspoilers des Fahrzeugs ausgeführt ist.

## Claims

1. A vehicle with a roof (2) and at least one vortex generator (8) in the region of the trailing edge of the roof (2), wherein the vortex generator (8) has an air guiding body (10), the longitudinal axis (12) of which runs at an angle of between 0° and 45° to the longitudinal direction (x) of the vehicle, wherein the vortex generator (8) has a curved longitudinal axis (12) and the connecting line (19) of the leading edge and trailing edge (12 or 16) of the vortex generator (8) includes an angle (ϕ) of between 0° and 45° with the longitudinal direction (x) of the vehicle,
**characterised in that** the angle (α) which is included by the tangent (15) on the longitudinal axis (12) of the vortex generator (8) in the front region thereof with the longitudinal direction (x) of the vehicle, is greater than the angle (β) which is included by the tangent (17) on the longitudinal axis (12) of the vortex generator (8) in the rear region thereof with the longitudinal direction (x) of the vehicle.

2. A vehicle according to claim 1, **characterised in that** the leading edge (14) of the at least one vortex generator (8) is arranged at a shorter distance (d) from the longitudinal centre plane (M) of the vehicle than the trailing edge (16).

3. A vehicle according to claim 1 or claim 2, **characterised in that** the vortex generators (8) are arranged in an axially symmetrical manner with respect to the longitudinal centre plane (M) of the vehicle roof (2) on the two side halves of the roof (2) and/or of a rear window (6) and/or of a roof spoiler of the vehicle.

4. A vehicle according to any one of the preceding claims, **characterised in that** a plurality of vortex generators (8) is provided on both sides of the longitudinal centre plane (M).

5. A vehicle according to any one of the preceding claims, **characterised in that** at least two adjacent vortex generators (8) are oriented in the same direction.

6. A vehicle according to any one of the preceding claims, **characterised in that** at least two adjacent vortex generators (8) are oriented in opposite directions.

7. A vehicle according to any one of the preceding claims, **characterised in that** the shape and/or the size of the vortex generators (8) and/or the curvature and/or the angle (ϕ) at which the vortex generators (8) are arranged relative to the longitudinal axis (x) of the vehicle, differs for the individual vortex generators (8).

8. A vehicle according to any one of the preceding claims, **characterised in that** the at least one lateral surface (22) of the vortex generator (8) is curved in a concave manner.

9. A vehicle according to any one of the preceding claims, **characterised in that** the at least one vortex generator (8) is configured as a separate component from the roof (2) and/or from a rear window (6) and/or from a roof spoiler of the vehicle and is connected in a form-locking and/or firmly bonded manner to the roof (2) or to the rear window (6) or to the roof spoiler.

10. A vehicle according to any one of claims 1 to 8, **characterised in that** the at least one vortex generator (8) is configured as an integral component of the roof (2) and/or of a rear window (6) and/or of a roof spoiler of the vehicle.

## Revendications

1. Véhicule équipé d'un toit (2) et d'au moins un générateur de turbulence (8) dans la région du bord arrière du toit (2),
- le générateur de turbulence (8) comportant un organe de guidage d'air (10) dont l'axe longitudinal (12) fait un angle compris entre 0° et 45° par rapport à la direction longitudinale (x) du véhicule,
- le générateur de turbulence (8) ayant un axe longitudinal (12), courbe et la ligne de liaison (19) entre le bord avant et le bord arrière (12, 16) du générateur de turbulence (8) faisant par rapport à la direction longitudinale (x) du véhicule, un angle (ϕ) compris entre 0° et 45°,
véhicule **caractérisé en ce que**
l'angle (α) entre la tangente (15) à l'axe longitudinal (12) du générateur de turbulence (8) dans sa zone avant et la direction longitudinale (x) du véhicule est supérieur à l'angle (β) que fait la tangente (17) à l'axe longitudinal (12) du générateur de turbulence (8) dans sa zone arrière, avec la direction longitudinale (x) du véhicule.

2. Véhicule selon la revendication 1,
**caractérisé en ce que**
l'arête avant (14) d'au moins un générateur de turbulence (8) est situé à une distance (d) par rapport au plan médian longitudinal (M) du véhicule, inférieure à celle de l'arête arrière (16).

3. Véhicule selon l'une des revendications 1 ou 2,
**caractérisé en ce que**
les générateurs de turbulence (8) sont situés dans des positions axiales symétriques par rapport au plan médian longitudinal (M) du toit (2) du véhicule, sur les deux moitiés du toit (2) et/ou de la lunette arrière (6) et/ou du déflecteur de toit du véhicule.

4. Véhicule selon l'une des revendications précédentes,
**caractérisé par**
un ensemble de générateurs de turbulence (8) des deux côtés du plan médian longitudinal (M).

5. Véhicule selon l'une quelconque des revendications précédentes,
**caractérisé en ce qu'**
au moins deux générateurs de turbulence (8), voisins sont orientés dans le même sens.

6. Véhicule selon l'une quelconque des revendications précédentes,
**caractérisé en ce qu'**
au moins deux générateurs de turbulence (8), voisins sont orientés en sens opposé.

7. Véhicule selon l'une quelconque des revendications précédentes,
**caractérisé en ce que**
la forme et/ou la taille des générateurs de turbulence (8) et/ou la courbure et/ou l'angle (ϕ) des générateurs de turbulence (8) par rapport à l'axe longitudinal (x) du véhicule sont différents pour les divers générateurs de turbulence.

8. Véhicule selon l'une quelconque des revendications précédentes,
**caractérisé en ce qu'**
au moins une surface latérale (22) du générateur de turbulence (8) est de forme bombée concave.

9. Véhicule selon l'une quelconque des revendications précédentes,
**caractérisé en ce qu'**
au moins un générateur de turbulence (8) est un composant distinct du toit (2) et/ou de la lunette arrière (6) et/ou du déflecteur de toit du véhicule et est relié au toit (2) ou à la lunette arrière (6) ou au déflecteur de toit par une liaison par la forme et/ou par la matière.

10. Véhicule selon l'une des revendications 1 à 8,
**caractérisé en ce qu'**
au moins un générateur de turbulence (8) est une pièce intégrale du toit (2) et/ou la lunette arrière (6) et/ou du déflecteur de toit du véhicule.
